# EUROPEAN PATENT APPLICATION

(11) **EP 2 512 017 A1**
(43) Date of publication of application: **17.10.2012**
(21) Application number: 12164114.6
(22) Date of filing: 13.04.2012
(51) Int. Cl.: H02K 49/10, H02K 1/27

(54) **Rotor for permanent-magnet linear actuator**

(30) Priority: 15.04.2011 IT PD20110126
(71) Applicant: Topp S.p.A. A Socio Unico, 36066 Sandrigo, VI (IT)
(72) Inventor: Cavalcante, Toni, 36031 Dueville vi (IT)
(74) Representative: Modiano, Micaela Nadia

(57) **Abstract**

A rotor (10) for a permanent-magnet linear actuator (11), comprising a series of permanent magnets (12, 12a, 12b, 12c, 12d) which are supported by a shaft (13) associated with means for its rotation (14, 15), the permanent magnets being arranged laterally adjacent in the direction of the longitudinal axis (X) of the shaft, with polarities that are shifted out of phase, in succession, by a preset angle.

Each permanent magnet (12, 12a, 12b, 12c, 12d) is constituted by a flat body which comprises a central portion (16) for fixing to the shaft (13) and at least two opposite symmetrical pole shoes (17, 18) which form the poles, with an external profile (19, 20) shaped like a circular arc.

## Description

The present invention relates to a rotor for a permanent-magnet linear actuator.

In EPA 08850590.4, in the name of the same Applicant, a permanent-magnet linear actuator is described and claimed, the particularity of which lies in that it comprises a moving part, to be coupled integrally to a first body adapted to be moved with respect to a second fixed body, and a fixed part, to be coupled integrally to the second body which is designed to remain substantially stationary, a first one of the two parts comprising guiding means for corresponding sliding means that are integral with the second part.

One of such parts, for example the moving part, has a series of first permanent magnets aligned in a row extending in the direction of translational motion and formed by the cooperation of the sliding means with the guiding means, the other one of the two parts having, facing toward the row of first permanent magnets, a rotor comprising a series of second permanent magnets, which are supported by a shaft which is associated with means for its rotation, the second magnets being arranged laterally adjacent in the direction of the longitudinal axis of the shaft, with polarities shifted out of phase, in succession, by a preset angle.

The first moving part can for example be a flat guide that is designed to be fixed for example to a leaf of a door, or of a generic window or door, slideable, while the second part, fixed, can be the previously mentioned permanent magnet rotor, which is fixed inside a box-like containment body that is adapted to be fixed between the jambs of a door facing toward the flat guide with which the rotor is engaged by way of an adapted slide.

A permanent-magnet linear actuator as indicated above operates as described below.

By powering the electric motor that moves the permanent magnet rotor (where the electric motor is also positioned inside the box-like body that contains the permanent magnet rotor), the rotation of the rotor and the consequent translational movement of the guide are obtained as a result of the magnetic force exerted by the rotor on the row of permanent magnets set into the guide.

Together with the guide, naturally, the slideable door leaf on which the guide is fixed also performs a translational motion.

By inverting the rotation of the rotor the movement of the leaf of the sliding door in the opposite direction is obtained.

In the implementation of such a linear actuator, a major problem arises with providing the rotor element.

Such a rotor element comprises in fact, according to what is described and claimed in the above-mentioned patent document, a series of supports for magnets, keyed on a shaft, each support bearing two magnets arranged in diametrically opposite positions.

The magnets fixed to a first support are shifted out of phase by 90° with respect to the magnets supported by the axially adjacent second support, and the same goes for the magnets of the next support.

In a different embodiment of the rotor element described in the aforementioned patent document, the supports for the magnets are octagonal, thus bearing eight magnets of alternating polarities.

In a further different embodiment of the rotor element described in the patent document, the magnets are semicircular in section and are coupled two by two with opposite polarities so as to define a disc that is centrally keyed on the drive shaft.

Such embodiments have been shown to be laborious in terms of assembly, as well as cumbersome and prone to a linear movement that is uneven and imprecise, i.e. jerky.

Moreover, the application of such a rotor in a linear actuator for the translational movement of a leaf of a sliding door determines a decrease of the open passageway of the sliding door with the door leaf open, since the guide must always be facing the rotor, and thus a last portion of the door leaf will never enter its slideaway side compartment, but remains protruding from that compartment for a length that corresponds to the length of the rotor.

This implies that the more axially compact the rotor is, the wider is the open passageway of the sliding door with the door leaf open.

The aim of the present invention is to provide a rotor for a permanent-magnet linear actuator that is easy to assemble.

Within this aim, an object of the invention is to provide a rotor that operates silently and with a behavior that is substantially linear and not jerky.

Another object of the invention is to provide a rotor for a permanent-magnet linear actuator which is axially compact and generally of reduced encumbrance.

Another object of the invention is to provide a rotor for a permanent-magnet linear actuator that can be made using known systems and technologies.

This aim and these and other objects which will become more apparent hereinafter are achieved by a rotor for a permanent-magnet linear actuator, comprising a series of permanent magnets which are supported by a shaft associated with means for its rotation, said magnets being arranged laterally adjacent in the direction of the longitudinal axis of the shaft, with polarities that are shifted out of phase, in succession, by a preset angle, said rotor being **characterized in that** each permanent magnet is constituted by a flat body which comprises a central portion for fixing to said shaft and at least two opposite symmetrical pole shoes, which form the poles, having an external profile shaped like a circular arc.

Further characteristics and advantages of the invention will become more apparent from the description of two preferred, but not exclusive, embodiments of the rotor for a permanent-magnet linear actuator according to the invention, which are illustrated, by way of non-limiting example, in the accompanying drawings wherein:
Figure 1 is a perspective view of a permanent-magnet linear actuator of which the rotor according to the invention is part;
Figure 2 is a sectional view of a door with a linear actuator provided with a rotor according to the invention as in Figure 1;
Figure 3 is an exploded perspective view of the rotor according to the invention;
Figure 4 is a plan view of a component of a rotor according to the invention;
Figure 5 is a perspective view of the component in Figure 4;
Figure 6 is a simplified perspective view of a different embodiment of the rotor according to the invention;
Figure 7 is a side view of the different embodiment in Figure 6;
Figure 8 is a sectional side view of the rotor according to the invention;
Figure 9 is a perspective view of the rotor according to the invention in the assembled condition;
Figure 10 is a perspective view of a rotor according to the invention inside a box-like body for support and protection;
Figure 11 is a perspective view of a portion of a linear actuator provided with rotor according to the invention.

With reference to the figures, a rotor for a permanent-magnet linear actuator according to the invention is generally designated with the reference numeral 10.

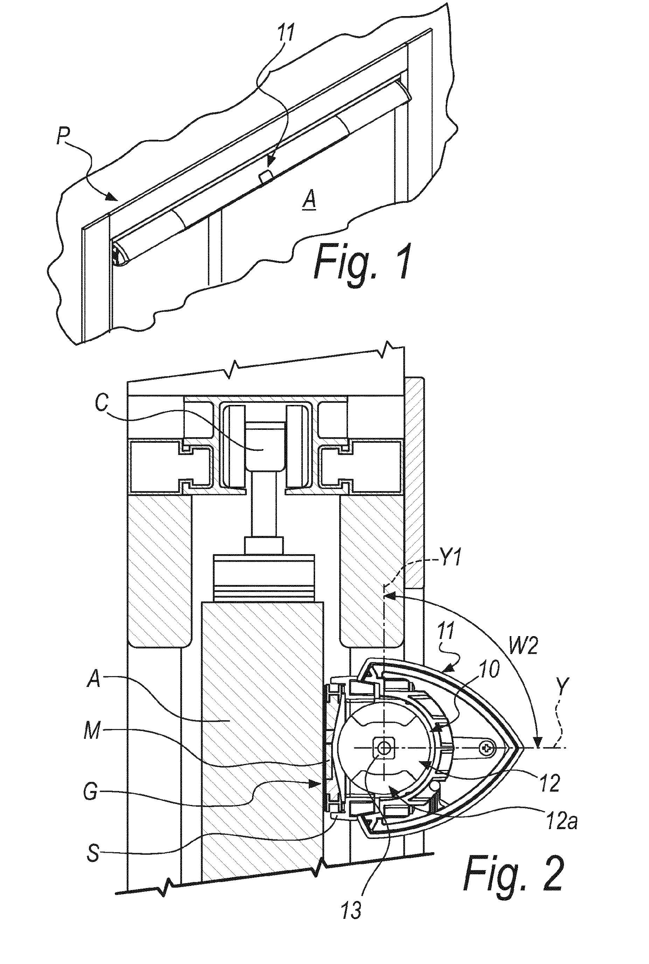

Such rotor 10 is part of a permanent-magnet linear actuator 11, shown in Figure 1 as applied between the jambs of a slideaway door P, the door leaf A of which is thus to be moved by translational motion.

The cross-section in Figure 2 shows a rotor 10 according to the invention inside the linear actuator 11 of which it is part, the guide G of which, also provided with permanent magnets M arranged substantially as described above for the known art, is fixed to the door leaf A, which in turn is hung on one or more trolleys C for the translational motion of the door leaf A.

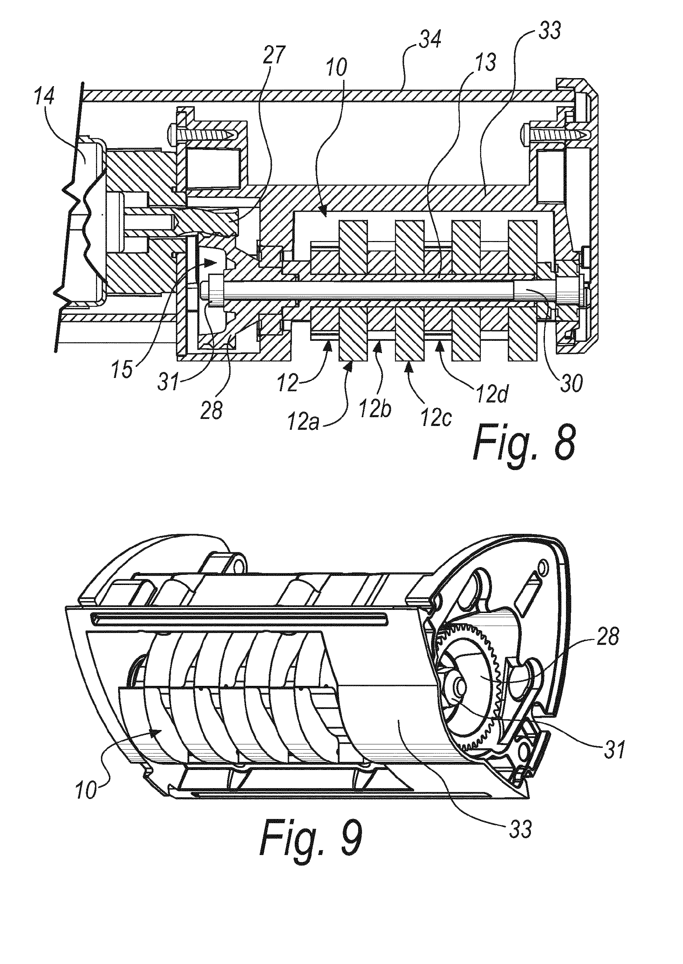

The rotor 10 comprises a series of permanent magnets 12, 12a, 12b, 12c etc., which are supported by a shaft 13 which is associated with means for its rotation, for example an electric motor 14 with reduction gear 15, schematically shown in Figure 8 and described in more detail below.

The permanent magnets 12, 12a, 12b etc. are arranged laterally adjacent in the direction of the longitudinal axis of the shaft X, with polarities shifted out of phase, in succession, by a preset angle.

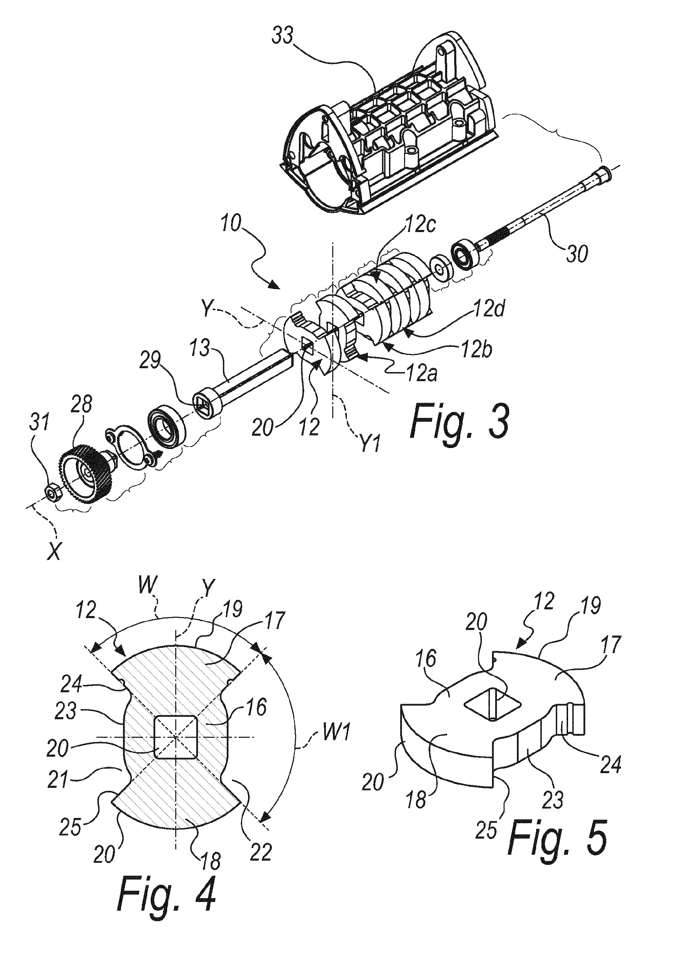

The particularity of the invention lies in that each permanent magnet 12, 12a, 12b etc. is constituted, as can clearly be seen in Figures 4 and 5, by a flat body comprising a central portion 16, with a central through hole 20 for fixing to the shaft 13, and two opposite symmetrical pole shoes 17 and 18.

Such pole shoes 17 and 18 advantageously have an external profile, 19 and 20 respectively, which is shaped like a circular arc, so that the gap that is formed between such pole shoes and the permanent magnets M of the guide G is substantially constant at its lowest point.

Such pole shoes can also be provided with an external profile comparable to a circular arc, such as a polygonal chain, or a serrated profile, or another similar profile.

Such permanent magnets can also be provided with more than two symmetrical pole shoes, i.e. each permanent magnet can have four, six, eight or more poles, possibly even an odd number of poles, according to necessity and requirements.

The central portion 16 and the two opposite symmetrical portions having an external profile shaped like a circular arc are provided monolithically; thus, differently from the known art, the pole shoes are not fixed to a separate support which in turn is keyed on the rotating shaft; rather, support and pole shoes are a single piece, with evident advantages both in terms of the number of components to produce, and in terms of a faster assembly.

Each one of the two opposite symmetrical pole shoes, 17 and 18, shaped like a circular arc, extends through a center angle W comprised between 120° and 30°, and preferably, as in the example, each one extends through a center angle W of 90°.

Symmetrical recesses 21 and 22, clearly visible in Figure 4, are defined at the peripheral parts of the flat body between the two opposite pole shoes shaped like a circular arc 17 and 18 and are adapted to form, with the facing magnets M of the guide G, such a gap as to minimize magnetic interaction.

Each one of the recesses 21 and 22 extends through an angle W1 that is supplemental to the center angle W of a contiguous pole shoe shaped like a circular arc, for example 17.

In the non-limiting example of the invention described herein, each one of the recesses 21 and 22 is formed by the lateral surface 23 of the central portion 16, having smaller radial dimensions than the pole shoes shaped like a circular arc 17 and 18, and the lateral surfaces, which are arranged radially, 24 and 25, of the portions shaped like a circular arc 17 and 18.

The flat bodies, i.e. the permanent magnets 12, 12a etc., are arranged on the shaft 13 which supports them so that a first flat body, i.e. a first permanent magnet 12, is shifted out of phase, i.e. arranged angularly with respect to the axis X of the shaft, with respect to an adjacent second flat body, i.e. a second permanent magnet 12a, in the direction of the longitudinal axis X of the shaft, with the polar axis Y, perpendicular to the axis X, angularly shifted by an angle W2 that corresponds to the center angle W of a pole shoe 17 or 18.

Thus if the center angle W is 90°, the angle W2 between the polar axes Y and Y1 of two consecutive permanent magnets is 90°.

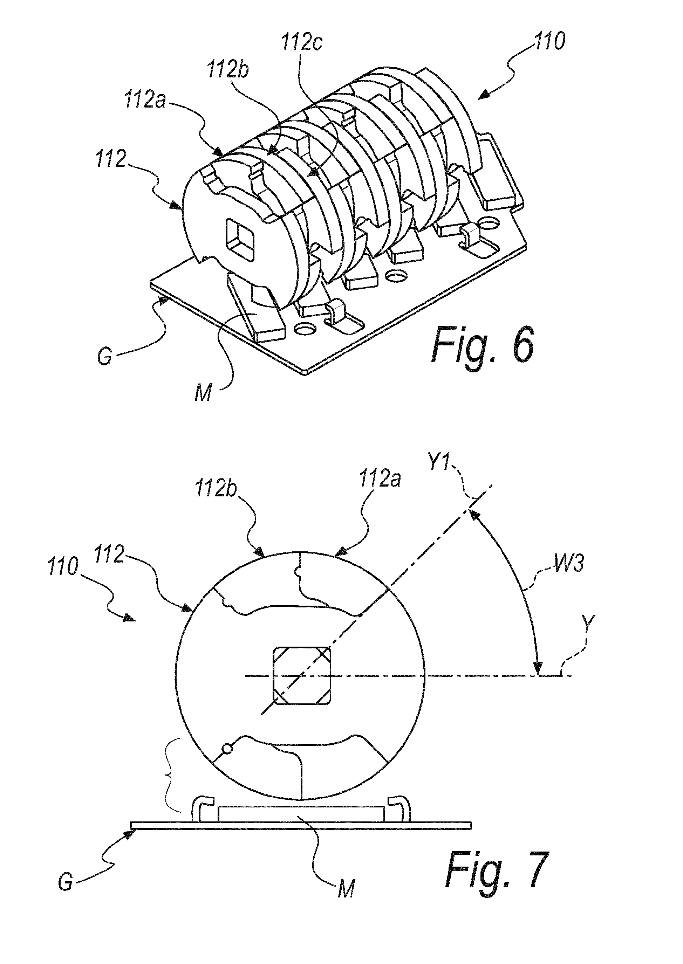

In a different embodiment of the rotor according to the invention, schematically shown in Figures 6 and 7 and generally designated therein with the reference numeral 110, the flat bodies, i.e. the permanent magnets 112, 112a etc., are arranged on the shaft 13 which supports them so that a first flat body, a first permanent magnet 112, is shifted out of phase, i.e. arranged angularly with respect to the axis of the shaft 13, with respect to an adjacent second flat body, a second permanent magnet 112a, in the direction of the axis of the shaft, with the polar axis Y angularly shifted with respect to the polar axis Y1 of the second magnet 112a through an angle W3 that corresponds to half of the center angle W of a pole shoe.

Thus if the center angle W is 90°, the angle W3 between the polar axes Y and Y1 of two consecutive permanent magnets is 45°.

Such different embodiment also means that the permanent magnets 112, 112a, 112b etc. are thinner, because a greater number of them must be arranged on the same shaft 13 and in the same space provided for the permanent magnets of the first type and with the first arrangement described above and shown in Figure 3.

With this embodiment of the invention, a magnetic interaction is achieved between the rotor 110 and the magnets M of the guide that is more homogeneous, since the pole shoes of the pack of permanent magnets 112, 112a, 112b etc. follow each other so as to form a shape that is overall helical.

With the permanent magnets positioned according to this advantageous different embodiment, a translational motion is thus obtained of the guide G, and thus of the door leaf A, which is more continuous and more silent than in the embodiment described previously with permanent magnets 12, 12a etc. successively rotated by 90° with respect to each other.

The means for the rotation of the shaft 13 are constituted, as mentioned above, by the electric motor 14, as in Figure 8, which is meant to rotate a first helical gearwheel 27 which is meshed with a second helical gearwheel 28 coaxially coupled to the shaft 13.

The shaft 13 is square in section, so that the permanent magnets 12, 12a, 12b etc. can be threaded and locked on it as a pack, thanks to the central through hole 20 with which each permanent magnet is provided, the hole 20 naturally being complementarily shaped with respect to the external profile of the transverse cross-section of the shaft 13.

The shaft 13 is moreover tubular and a screw 30 long enough to pass through both the shaft 13 and the second helical gearwheel 28 is placed through its axial hole 29. The fastening is ensured by a hexagonal nut 31 tightened on the side of the second helical gearwheel 28.

The helical gearwheels 27 and 28 form the reduction means 15 which are interposed between motor 14 and shaft 13.

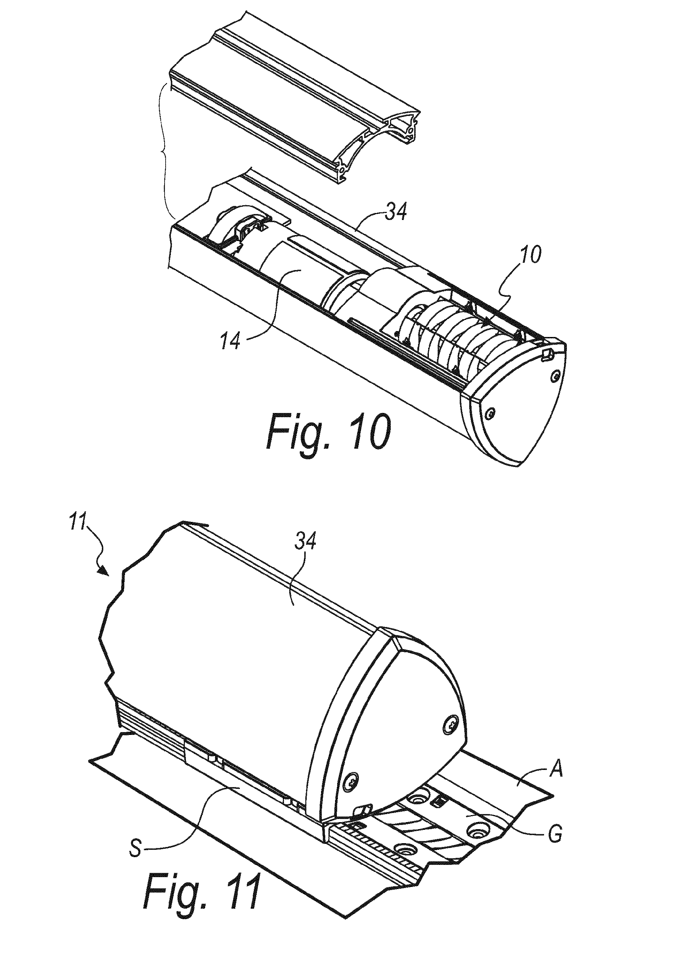

As shown in Figures 8 and 9, it can be seen that the rotor 10 is supported by a supporting frame 33, made of plastic material and designed to be screwed to the box-like body 34 for containment of the rotor, so that the rotor 10 is directed toward the guide G, as shown in Figure 11.

The box-like body 34 of the actuator 11 is connected to the guide G by means of a slide S fixed to the box-like body 34 and adapted for a corresponding translational movement with respect to the guide G with which it is associated.

In practice it has been found that the invention fully achieves the intended aim and objects.

In fact, with the invention a rotor for a permanent-magnet linear actuator is provided which is easy to assemble.

Moreover, with the invention a rotor is provided that operates silently and with a behavior that is substantially linear and not jerky.

In addition, with the invention a rotor for a permanent-magnet linear actuator is provided which is axially compact and generally of reduced encumbrance.

Last but not least, with the invention a rotor for a permanent-magnet linear actuator is provided that can be made using known systems and technologies.

The invention, thus conceived, is susceptible of numerous modifications and variations, all of which are within the scope of the appended claims. Moreover, all the details may be substituted by other, technically equivalent elements.

In practice the materials employed, and the contingent dimensions and shapes, may be any according to requirements and to the state of the art.

The disclosures in Italian Patent Application No. PD2011A000126 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A rotor (10) for a permanent-magnet linear actuator (11), comprising a series of permanent magnets (12, 12a, 12b, 12c, 12d) which are supported by a shaft (13) associated with means for its rotation (14, 15), said permanent magnets being arranged laterally adjacent in the direction of the longitudinal axis (X) of the shaft, with polarities that are shifted out of phase by a preset angle, said rotor being **characterized in that** each permanent magnet (12, 12a, 12b, 12c, 12d) is constituted by a flat body which comprises a central portion (16) for fixing to said shaft (13) and at least two opposite symmetrical pole shoes (17, 18).

2. The rotor according to claim 1, **characterized in that** said central portion (16) and said at least two opposite symmetrical pole shoes (17, 18) having an external profile (19, 20) shaped like a circular arc are monolithic.

3. The rotor according to the preceding claims, **characterized in that** said pole shoes (17, 18) have an external profile (19, 20) shaped like a circular arc.

4. The rotor according to claim 1, **characterized in that** said flat body has said two opposite symmetrical pole shoes (17, 18) shaped like a circular arc, each one extending through a center angle (W) comprised between 120° and 30° and each one preferably extending through a center angle (W) of 90°.

5. The rotor according to claim 4, **characterized in that** symmetrical recesses (21, 22) are defined at the peripheral parts of said flat body between the two opposite pole shoes (17, 18) and are adapted to form, with facing magnets (M) of an associated guide (G), such a gap as to minimize magnetic interaction.

6. The rotor according to claim 5, **characterized in that** each one of said recesses (21, 22) extends through an angle (W1) which is supplemental to the center angle (W) of a contiguous pole shoe shaped like a circular arc (17, 18).

7. The rotor according to claim 5, **characterized in that** each one of said recesses (21, 22) is formed by a lateral surface (23) of said central portion (16), having smaller radial dimensions than the pole shoes shaped like a circular arc (17, 18) and lateral surfaces (24, 25), which are arranged radially, of said pole shoes shaped like a circular arc (17, 18).

8. The rotor according to claim 4, **characterized in that** said flat bodies are arranged on said shaft (13), which supports them so that a first flat body is shifted out of phase, i.e., arranged angularly with respect to the axis (X) of the shaft (13), with respect to an adjacent second flat body, which is adjacent in the direction of the axis (X) of said shaft (13), with a polar axis (Y) angularly shifted, with respect to a respective polar axis (Y1) of the second flat body, through an angle (W2) that corresponds to the center angle (W) of a pole shoe (17, 18).

9. The rotor according to claim 4, **characterized in that** said flat bodies are arranged on said shaft (13) that supports them so that a first flat body is shifted out of phase, i.e., arranged angularly with respect to the axis of the shaft, with respect to an adjacent second flat body in the direction of the axis of said shaft, with the polar axis (Y) shifted angularly, with respect to a respective polar axis (Y1) of the second flat body, through an angle (W3) that corresponds to a fraction of the center angle (W) of a polar shoe (17, 18).
